# EUROPEAN PATENT SPECIFICATION

(11) **EP 2 626 123 B1**
(45) Date of publication and mention of the grant of the patent: **18.07.2018**
(21) Application number: 13153958.7
(22) Date of filing: 05.02.2013
(51) Int. Cl.: B01D 46/24, F01N 3/022, F01N 3/28

(54) **Honeycomb catalyst body**
Wabenstruktur-Katalysatorkörper
Corps de catalyseur en nid d'abeille

(30) Priority: 10.02.2012 JP 2012027383
(43) Date of publication of application: 14.08.2013
(73) Proprietor: NGK Insulators, Ltd., Nagoya-city, Aichi 467-8530 (JP)
(72) Inventor: Sugimoto, Kentaro, Nagoya-city, Aichi 467-8530 (JP)
(74) Representative: Naylor, Matthew John

(56) References cited:
- EP-A1- 0 089 127
- EP-A1- 2 364 765
- WO-A1-2011/090015
- US-A1- 2011 048 227

## Description

### Background of the Invention and Related Art Statement

The present invention relates to a plugged honeycomb structure and a honeycomb catalyst body using the plugged honeycomb structure. More specifically, the present invention relates to a plugged honeycomb structure capable of effectively inhibiting crack generation in the inflow end face and a honeycomb catalyst body using the plugged honeycomb structure.

Exhaust gas discharged from internal combustion engines such as diesel engines or various combustion apparatuses contains a large amount of particulate matter mainly containing soot. Since release of the particulate matter in the atmosphere with no change causes environmental pollution, it is general to mount a filter for trapping particulate matter in an exhaust gas passage from an internal combustion engine or the like.

An example of a filter used for such a purpose is a plugged honeycomb structure provided with a honeycomb structural portion having porous partition walls separating and forming cells and a plurality of plugging portions plugging end portions on one side of cells (see, e.g., JP-A-2009-195805 and EP0089127).

In the plugged honeycomb structure, exhaust gas first flows into cells having plugging portions in the end portions on the discharge side, then passes through the partition walls via pores to move into cells having plugging portions in the end portions on the inflow side, and is finally discharged out of the plugged honeycomb structure. Thus, when the exhaust gas passes through the partition walls, particulate matter contained in the exhaust gas can be trapped.

However, in a conventional plugged honeycomb structure, when temperature of exhaust gas is changed, a large temperature difference is prone to be caused between the central portion of the plugged honeycomb structure and the outer peripheral portion, and, as a result, a crack may be caused in the plugged honeycomb structure. In particular, a plugged honeycomb structure is prone to have a remarkable temperature difference between the central portion and the outer peripheral portion according to the increase of the thermal capacity for the plugged portions arranged, and thereby thermal stress tends to be caused. In addition, in a plugged honeycomb structure, since rigidity is enhanced by plugging portions, the thermal stress is hardly relaxed. As a result, when the thermal stress is caused, it easily leads to crack generation.

### Summary of the Invention

In view of the aforementioned problem, the present invention aims to provide a technique relating to a filter capable of inhibiting crack generation upon purification of exhaust gas.

The present invention is the honeycomb catalyst body according to claim 1.
[2] The honeycomb catalyst body according to [1], wherein the width of the second cell group is for one to four cells from the cell located in the outermost periphery of the honeycomb structural portion.

In a plugged honeycomb structure of the present invention, since the plugging portions are not arranged in the outer peripheral portion of the inflow end face, the thermal stress generated in the plugged honeycomb structure can be released in the outer peripheral portion of the inflow end face. This enables to inhibit crack generation in the outer peripheral portion of the inflow end face of the plugged honeycomb structure, the outer peripheral portion allegedly having crack generation easily.

In a plugged honeycomb structure of the present invention, since the plugging portions are arranged in end portions of only specific cells in the central portion of the inflow end face, inflow of the gas into the cells in the central portion is suppressed, and inflow of the gas into the cells in the outer peripheral portion is not suppressed. Therefore, the tendency that gas flows more in the central portion can be relaxed in a plugged honeycomb structure of the present invention. As a result, in a plugged honeycomb structure of the present invention, when gas temperature change is caused, the temperature difference between the central portion of the plugged honeycomb structure and the outer peripheral portion is hardly increased, and eventually crack generation due to the thermal stress can be inhibited.

### Brief Description of the Drawings

[Fig. 1] Fig. 1 is a perspective view showing a plugged honeycomb structure of an embodiment of the present invention with the inflow end face facing upward.
[Fig. 2] Fig. 2 is a perspective view showing the plugged honeycomb structure shown in Fig. 1 with the outflow end face facing upward.
[Fig. 3] Fig. 3 is a cross-sectional view taken along A-A' of the plugged honeycomb structure shown in Fig. 2.
[Fig. 4] Fig. 4 is a plan view where a part of the inflow end face of the honeycomb structural portion is enlarged.
[Fig. 5] Fig. 5 is a cross-sectional view schematically showing one embodiment of a honeycomb catalyst body of the present invention.

### Reference Numerals

10: cell, 10a: cell (first cell from the outermost periphery), 10b: cell (second cell from the outermost periphery), 10c: cell (third cell from the outermost periphery), 10d: cell (fourth cell from the outermost periphery), 10e: cell (fifth cell from the outermost periphery), 30: partition wall, 50: plugging portion, 60: outer peripheral wall, 70: inflow end face, 90: outflow end face, 100: plugged honeycomb structure, 130: inflowside opencell, 135: outflow side open cell, 200: first cell group, 300: second cell group, 500: honeycomb structural portion, 600: catalyst carrier, 650: honeycomb catalyst body

### Detailed Description of the Invention

### (1) Plugged honeycomb structure:

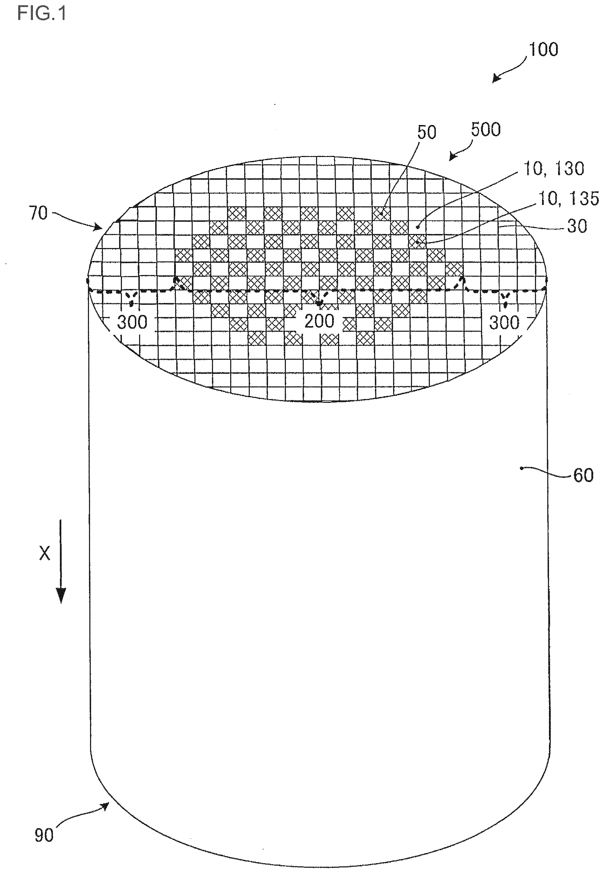

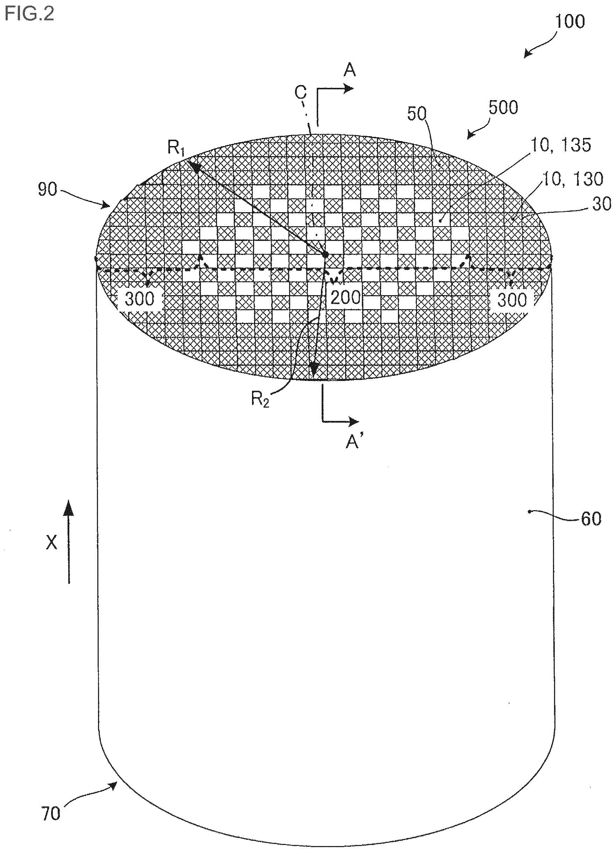

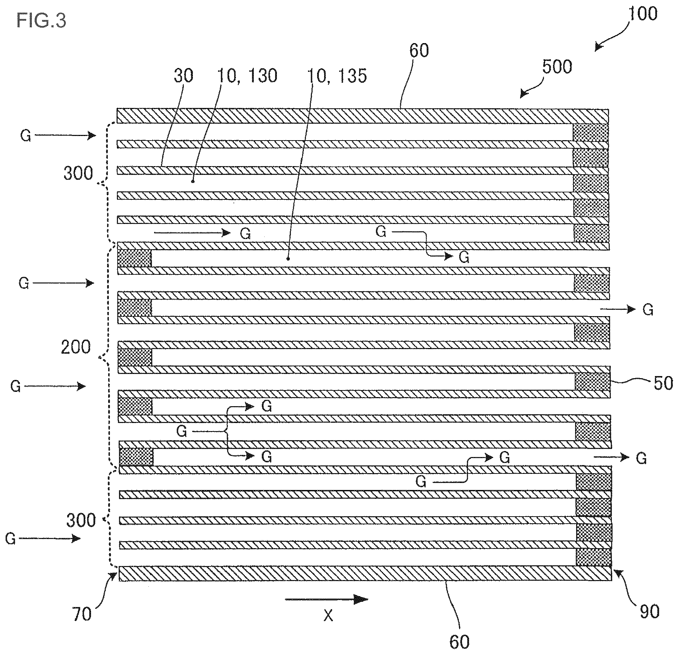

Fig. 1 is a perspective view of a plugged honeycomb structure 100 with the inflow end face 70 facing upward. Fig. 2 is a perspective view showing the plugged honeycomb structure 100 shown in Fig. 1 with the outflow end face 90 facing upward. Fig. 3 is a cross-sectional view taken along A-A' of the plugged honeycomb structure shown in Fig. 2. As shown in the figures, the plugged honeycomb structure 100 is provided with a honeycomb structural portion 500 having porous partition walls 30 separating and forming a plurality of cells 10 extending from the inflow end face 70 to the outflow end face 90 and functioning as fluid (gas G) passages and a plurality of plugging portions 50 plugging end portions of the cells 10.

As shown in Figs. 1 and 2, the honeycomb structural portion 500 of the plugged honeycomb structure 100 has the first cell group 200 and the second cell group 300. The first cell group 200 is constituted of an aggregate of the cells 10 present in a central portion of the honeycomb structural portion 500. The second cell group 300 is constituted of an aggregate of the cells 10 surrounding the outer periphery of the first cell group 200. The central portion of the honeycomb structural portion 500 means the portion including the center in a cross section perpendicular to the cell extension direction X of the honeycomb structural portion 500 as the base point and being formed by a region containing a predetermined range in the diametral direction of the cross section from the center. The aggregate of the cells 10 present in such a region constitutes the first cell group 200.

Further, as shown in Fig. 3, in a plugged honeycomb structure 100 the first cell group 200 is constituted so that the cells 10 having the plugging portions 50 disposed in the end portions on the inflow end face 70 side and no plugging portions 50 disposed in the end portions on the outflow end face 90 side and the cells 10 having the plugging portions 50 disposed in the end portions on the outflow end face 90 side and no plugging portions 50 disposed in the end portions on the inflow end face 70 side are alternately arranged across the partition walls 30.

In the plugged honeycomb structure 100 the second cell group 300 is constituted of the cells 10 having the plugging portions 50 disposed in the end portions on the outflow end face 90 side and no plugging portions 50 disposed in the end portions on the inflow end face 70 side.

In the present specification, for convenience of description, the "cell 10 having the plugging portions 50 disposed in the end portions on the outflow end face 90 side and no plugging portions 50 disposed in the end portions on the inflow end face 70 side" may hereinbelow be referred to as the "inflow side open cell 130". In addition, the "cells 10 having the plugging portions 50 disposed in the end portions on the inflow end face 70 side and no plugging portions 50 disposed in the end portions on the outflow end face 90 side" may hereinbelow be referred to as the "outflow side open cell 135".

Generally, in a conventional plugged honeycomb structure, the exhaust gas flow rate in a central portion tends to be higher than the flow rate in the outer peripheral portion. Since such bias of the exhaust gas flow rate is reflected, the central portion of the plugged honeycomb structure tends to be quickly heated or quickly cooled due to the exhaust gas temperature change. On the other hand, the outer peripheral portion of the plugged honeycomb structure tends to be hardly heated and hardly cooled even if the exhaust gas temperature change is caused. Therefore, in the conventional plugged honeycomb structure, a large difference (thermal stress) in the thermal expansion is caused between the central portion and the outer peripheral portion. Thus cracks tend to be generated.

For such a problem, in the plugged honeycomb structure 100 the inflow of the gas G is inhibited in the first cell group 200 because the end portions of almost half of the cells 10 are plugged on the inflow end face 70 side with the plugging portions 50 while the inflow of the gas G is not inhibited in the second cell group 300 because all the cells 10 have open end portions on the inflow end face 70 side. That is, in the plugged honeycomb structure 100 of the present embodiment, the inflow of the gas into the cells 10 in the central portion is inhibited while the inflow of the gas into the cells 10 in the outer peripheral portion is not inhibited. Therefore, in the plugged honeycomb structure 100 the tendency that the gas G flow rate is biased toward the central portion can be relaxed.

By the relaxation of the bias of the gas flow rate, when the gas G temperature change is caused in the plugged honeycomb structure 100 of the present embodiment, the temperature difference between the central portion and the outer peripheral portion of the plugged honeycomb structure 100 hardly spreads to suppress crack generation due to thermal stress.

In the plugged honeycomb structure 100 as shown in Fig. 1, since the plugging portions 50 are not disposed in the outer peripheral portion of the inflow end face 70 of the plugged honeycomb structure 100, the thermal stress can be released in the outer peripheral portion of the inflow end face 70. This enables to successfully inhibit crack generation in the outer peripheral portion of the inflow end face 70, where a crack generation is easily caused in the conventional plugged honeycomb structure.

That is, in a plugged honeycomb structure 100 when the stress acting in the radial direction toward the outer side from the central axis C of the plugged honeycomb structure 100 (e.g., stress R₁ and stress R₂ of Fig. 2) or the stress acting in the radial direction toward the central axis C is caused, since all the cells 10 of the second cell group 300 present in the outer peripheral portion are open at the inflow end face 70, the partition walls 30 separating and forming the cells 10 constituting the second cell group 300 can strain mainly in the vicinity of the inflow end face 70. That is, in the plugged honeycomb structure 100 the stress can be released by the strain of the partition walls 30 present in the outer peripheral portion.

Further, in the plugged honeycomb structure 100 as shown in Fig. 2, since all the cells 10 of the second cell group 300 present in the outer peripheral portion have plugging portions 50 plugging the end portions on the outflow end face 90 side, structural strength of the plugged honeycomb structure 100 against the pressing force from the side is enhanced.

In addition, in the plugged honeycomb structure 100 the partition walls 30 are porous, that is, the partition walls 30 have numerous pores. In the plugged honeycomb structure 100 particulate matter in the gas G is trapped by the porous partition walls 30 in the process where the gas Gpasses as described below. Referring to Fig. 3, in the first place, the gas G flows into the inflow side open cells 130. Next, since the end portions of the inflow side open cells 130 are plugged with plugging portions 50 on the outflow end face 90 side, the gas G passes through the partition walls 30 through the pores and flows into the adjacent cells 10. When the gas G passes through the partition walls 30, the particulate matter contained in the gas G is trapped by the partition walls 30. Finally, the gas G is discharged outside from the end portions on the outflow end face 90 side of the outflow side open cells 135 in a clean condition with the particulate matter being reduced. That is, the plugged honeycomb structure 100 can function as a filter for gas purification.

In a plugged honeycomb structure 100 of the present embodiment, the shape of the honeycomb structural portion 500 is not particularly limited, and preferred are a circular cylindrical shape, a cylindrical shape having an oval cross-sectional shape, a prismatic columnar shape having the inflow end face 70 and the outflow end face 90 shape having a shape of "a square, a rectangle, a triangle, a pentagon, a hexagon, an octagon, or the like", etc.

As shown in Figs. 1 to 3, in the plugged honeycomb structure 100 the honeycomb structural portion 500 has an outer peripheral wall 60. However, the honeycomb structural portion 500 does not have to have the outer peripheral wall 60. Regarding the honeycomb structural portion 500 having the outer peripheral wall 60, the partition walls 30 and the outer peripheral wall 60 may be formed unitarily by extruding the partition walls 30 with the outer peripheral wall 60 when a honeycomb-shaped formed body is produced, or the outer peripheral wall 60 may be formed by applying a ceramic material to the outer periphery of the formed body after the honeycomb-shaped formed body is produced.

In the plugged honeycomb structure 100 from the viewpoints of inhibiting the increase in the temperature difference between the central portion and the outer peripheral portion of the plugged honeycomb structure 100 and inhibiting the crack generation due to thermal stress, the width of the second cell group 300 is preferably for one to four cells, more preferably for one to three cells from the cell 10 located in the outermost periphery of the honeycomb structural portion 500.

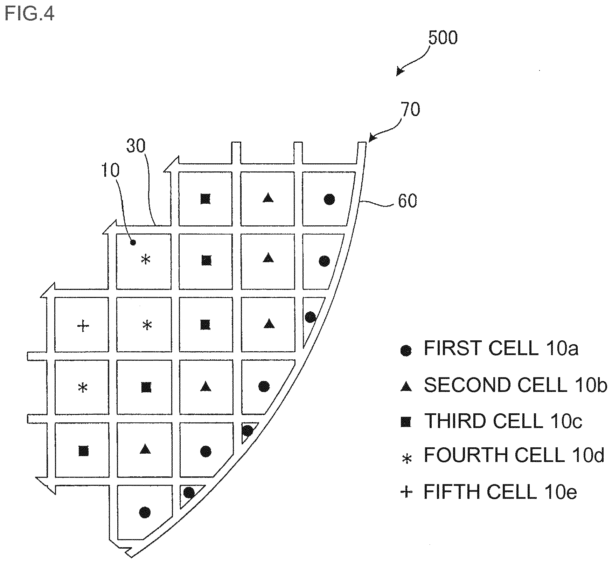

Fig. 4 is a plan view where a part of the inflow end face 70 of the honeycomb structural portion 500 is enlarged. With referring to Fig. 4, when an arbitrary cell 10a [shown by (●)] located in the outermost periphery of the honeycomb structural portion 500 is defined as the first cell, the cell 10b [shown by a triangle] adjacent to the cell 10a across a partition wall 30 is defined as the second cell "counted from the cell 10 located in the outermost periphery". The cell 10c [shown by a square (■)] adjacent to the second cell 10b across the partition wall 30 is defined as the third cell "counted from the cell 10 in the outermost periphery". Regarding the fourth or further cells 10, in the same manner, the cell 10 adjacent to the (n)th cell 10 "counted from the cell 10 located in the outermost periphery" across a partition wall 30 is defined as (n+1)th cell "counted from the cell 10 located in the outermost periphery" [In Fig. 4, the fourth cells 10d are shown with "*", and the fifth cells 10e are shown with "+"].

At this time, in the case that, regarding all the cells 10 from the first to (n)th cells "counted from the cells 10 located in the outermost periphery", plugging portions 50 are disposed in the end portions on the outflow end face 90 side, and no plugging portions 50 are disposed in the end portions on the inflow end face 70 side, and, at the same time, in the case that at least one cell having the plugging portion 50 in the end portion on the inflow end face 70 side and no plugging portion 50 in the end portion on the outflow end face 90 side is present among the (n+1)th cells 10 "counted from the cells 10 located in the outermost periphery", the width of the second cell group 300 is defined as the width for n cells "counted from the cells 10 located in the outermost periphery".

In particular, when the width of the second cell group 300 is for one to four cells counted from the cells 10 located in the outermost periphery of the honeycomb structural portion 500, the width of the second cell group 300 in a cross section perpendicular to the cell 10 extension direction X of the honeycomb structural portion 500 is preferably 1 to 40%, more preferably 1 to 10%, with respect to the length from the center of the cross section to the outer peripheral edge. That is, the cross section perpendicular to the cell extension direction X of the honeycomb structural portion 500 has a circular shape, the width of the second cell group 300 is preferably 1 to 40%, more preferably 1 to 10%, of the radius of the circle.

In the plugged honeycomb structure 100 is no particular limitation on the shape of the cells 10 (shape of opening in a cross section perpendicular to the cell 10 extension direction X). For example, the shape of the cells 10 is preferably a polygon such as a triangle, a rectangle, a hexagon, or an octagon. In the honeycomb structure 100 of the present embodiment, all the cells 10 may have the same shape, some of the cells 10 may have a shape different from that of the other cells 10, or all the cells may have a shape different from those of the other cells 10.

In the plugged honeycomb structure 100 the thickness of the partition walls 30 is preferably 101. 6 to 406.4 µm, more preferably 127.0 tο 355.6 µm, particularly preferably 152.4 to 304.8 µm. When the partition wall 30 is thinner than 101.6 µm, the strength of the plugged honeycomb structure 100 may become low. When the partition wall 30 is thicker than 355.6 µm, the pressure loss of the plugged honeycomb structure 100 may become high.

In the plugged honeycomb structure 100 the average pore size of the partition walls 30 is preferably 5 to 40 µm, more preferably 10 to 30 µm. When the average pore size of the partition walls 30 is smaller than 5 µm, the pressure loss of the plugged honeycomb structure 100 may become high. When the average pore size of the partition walls 30 is larger than 40 µm, the strength of the plugged honeycomb structure 100 may become low. The average pore size of the partition walls 30 is measured by a mercury porosimeter.

In the plugged honeycomb structure 100 there is no particular limitation on the cell density of the honeycomb structural portion 500. However, it is preferably 15 to 62 cells/cm², more preferably 31 to 47 cells/cm². When the cell density of the honeycomb structural portion 500 is lower than 15 cells/cm², strength of the plugged honeycomb structure 100 may become low. When the cell density of the honeycomb structural portion 500 is higher than 62 cells/cm², the cross-sectional area of the cells 10 (area of the cross section perpendicular to the cell 10 extension direction X) becomes small, thereby increasing the pressure loss.

In the plugged honeycomb structure 100 ceramic is preferable as the material for the partition walls 30, and more preferable is at least one kind selected from the group consisting of cordierite, silicon carbide, silicon-silicon carbide based composite material, mullite, alumina, aluminum titanate, silicon nitride, and silicon carbide-cordierite based composed material from the viewpoint of excellent strength and thermal resistance. Of these, cordierite is particularly preferable.

In the plugged honeycomb structure 100 ceramic is preferable as the material for the plugging portions 50, and more preferable is at least one kind selected from the group consisting of cordierite, silicon carbide, silicon-silicon carbide based composite material, mullite, alumina, aluminum titanate, silicon nitride, and silicon carbide-cordierite based composed material from the viewpoint of excellent strength and thermal resistance. Of these, cordierite is particularly preferable. In the plugged honeycomb structure 100 of the present embodiment, from the viewpoint of suppressing thermal stress by making the thermal expansion coefficient the same between the partition walls 30 and the plugging portions 50, the material for the plugging portions 50 is preferably the same as that for the partition walls 30.

### (2) Method for manufacturing plugged honeycomb structure:

A method for manufacturing a plugged honeycomb structure of the present invention will be described. In the first place, a kneaded material for manufacturing a honeycomb structure is prepared, and the kneaded material is formed to produce a honeycomb formed body (forming step).

Next, plugging is performed in the openings of the predetermined cells in the inflow end face and the outflow end face of the honeycomb formed body (plugging step).

### (2-1) Forming step:

In the first place, in the forming step, a ceramic forming raw material containing a ceramic raw material is formed to form a honeycomb formed body separating and forming a plurality of cells functioning as fluid passages.

As the ceramic raw material contained in the ceramic forming raw material, preferred are materials containing at least one kind selected from the group consisting of a cordierite-forming raw material, cordierite, mullite, alumina, titania, silicon carbide, and aluminum titanate; more preferred is at least one kind selected from the group consisting of a cordierite-forming raw material, cordierite, mullite, alumina, titania, silicon carbide, and aluminum titanate; and particularly preferred is one kind selected from the group consisting of a cordierite-forming raw material, cordierite, mullite, alumina, titania, silicon carbide, and aluminum titanate. Incidentally, the cordierite-forming raw material is a ceramic raw material having a chemical composition of 42 to 56 mass% of silica, 30 to 45 mass% of alumina, and 12 to 16 mass% of magnesia and forming cordierite by firing.

In addition, the ceramic forming raw material is preferably prepared by mixing a dispersion medium, an organic binder, an inorganic binder, a pore former, a surfactant, and the like to the aforementioned ceramic raw material. There is no particular limitation on the composition ratio of each raw material, and it is preferable to employ a composition ratio according to the structure, material, and the like of the honeycomb structure to be manufactured.

Upon forming a ceramic forming raw material, it is preferable to knead the forming raw material in the first place to obtain a kneaded material and then form the kneaded material into a honeycomb shape. There is no particular limitation on the method for preparing the kneaded material by kneading the forming raw material, and, for example, a method using a kneader, a vacuum kneader, or the like may be employed. There is no particular limitation on the method for forming a honeycomb formed body by forming the kneaded material, and a conventionally known forming method such as extrusion forming, injection forming, or the like may be employed. A suitable example is a method where a honeycomb formed body is formed by extrusion using a die having a desired cell shape, partition wall thickness, and cell density. As the material for the die used here, a superhard alloy which hardly abrades away is preferable.

There is no particular limitation on the shape of the honeycomb formed body, and a circular cylindrical shape (circular columnar shape), a cylindrical shape where the shape of a cross section perpendicular to the central axis is an oval; a racetrack shape; a polygon such as a triangle, quadrangle, pentagon, hexagon, or octagon; or the like may be employed. In the case that the honeycomb structure to be manufactured is formed by bonding a plurality of honeycomb segments, the shape of the honeycomb formed body is preferably a cylindrical shape (columnar shape) where a cross section perpendicular to the central axis is polygon such as a triangle, quadrangle, pentagon, hexagon, or octagon.

After the aforementioned forming, the honeycomb formed body may be dried. Though there is no particular limitation on the drying method, for example, hot air drying, microwave drying, dielectric drying, reduced pressure drying, vacuum drying, and freeze drying may be employed. Of these, it is preferable to perform dielectric drying, microwave drying, or hot air drying alone or in combination thereof.

### (2-2) Honeycomb structure manufacturing step:

Next, the honeycomb formed body obtained above is preferably fired to obtain a honeycomb structure. The honeycomb formed body may be fired after the plugging portions are disposed in the honeycomb formed body. [In this case, after the aforementioned" (2-1) forming step", the "(2-3) plugging step"(excluding the firing after filling the plugging material) described later is inserted.]

It is preferable to calcine the honeycomb formed body beforehand before firing (main firing) the honeycomb formed body. The calcination is performed for degreasing. There is no particular limitation on the calcination method as long as the organic matter (organic binder, dispersant, pore former, etc.) in the formed body can be removed. Generally, since the combustion temperature of an organic binder is about 100 to 300°C, and the combustion temperature of the pore former is about 200 to 800°C, it is preferable as the conditions for calcination to heat the honeycomb formed body at about 200 to 1000°C for three to 100 hours in an oxidation atmosphere.

The firing (main firing) of the honeycomb formed body is performed for densification by sintering the formed raw material constituting the calcined formed body in order to secure predetermined strength. Since the firing conditions (temperature, time, and atmosphere) depend on the kind of the forming raw material, appropriate conditions may be selected according to the kind of the forming raw material. For example, in the case that a cordierite-forming raw material is used, the firing temperature is preferably 1410 to 1440°C. In addition, the firing time is preferably four to six hours as the time for keeping the maximum temperature.

### (2-3) Plugging step:

Next, a plugging material is filled into the opening portions of the predetermined cells of the inflow end face and the outflow end face of the unplugged honeycomb structure to form plugging portions in the opening portions of the predetermined cells.

For the filling of the plugging material into the unplugged honeycomb structure, a conventional method may be employed. For example, the plugging material can be filled into the unplugged honeycomb structure by the following method.

In the first place, sheets are bonded to the inflow end face and the outflow end face of the unplugged honeycomb structure. Next, holes are made at the positions having the opening portions of the cells where the plugging portions are to be arranged of the bonded sheet (masking step). In the case of manufacturing a plugged honeycomb structure of the present invention, holes are made at the positions having the opening portions of the cells of the sheets bonded to the inflow end face and the outflow end face in the following method. In the first place, regarding the central portion where the first cell group is formed, holes are made for every other cell in the sheets bonded to the inflow side end face and the outflow side end face so that the inflow side open cells and the outflow side open cells are alternately disposed. Regarding the outer peripheral portion where the second cell group is formed, holes are made only in the sheet bonded to the outflow end face so that all the cells become the inflow side open cells. That is, regarding the cells in the outer peripheral portion, the plugging material described later is inhibited from entering the open portions of the inflow end face.

Subsequently, in the state of having the sheet having the holes, the end face of the honeycomb structure is pressed against the plugging material in a container. This enables the plugging material to be injected into the cells from the holes of the sheet (injection step). In the injection step, the plugging material flows only into the opening portions of the cells overlapping the holes of the sheet, and the plugging material does not flow into the opening portions of the cells not overlapping the holes of the sheet. Thus, the plugging material can be filled up to a desired depth into the opening portions of the predetermined cells.

Next, the plugging material filled into the opening portions of the cells is dried to form plugging portions to obtain a plugged honeycomb structure. The plugging material may be dried after the plugging material is filled into the honeycomb structure at both the end faces. Alternatively, it is possible that, after the plugging material is filled into the honeycomb structure at one end face and dried, the plugging material is filled into the honeycomb structure at the other end face and dried. Further, the plugging material may be fired for the purpose of more secure fixation. It is also possible that a plugging material is filled into the honeycomb formed body before drying or the honeycomb formed body after drying to subsequently fire the plugging material together with the honeycomb formed body.

### (3) honeycomb catalyst body:

A honeycomb catalyst body of the present invention uses the aforementioned plugged honeycomb structure (plugged honeycomb structure of the present invention) as the catalyst carrier. A honeycomb catalyst body of the present invention is provided with the aforementioned plugged honeycomb structure and a catalyst loaded on the partition walls of the plugged honeycomb structure.

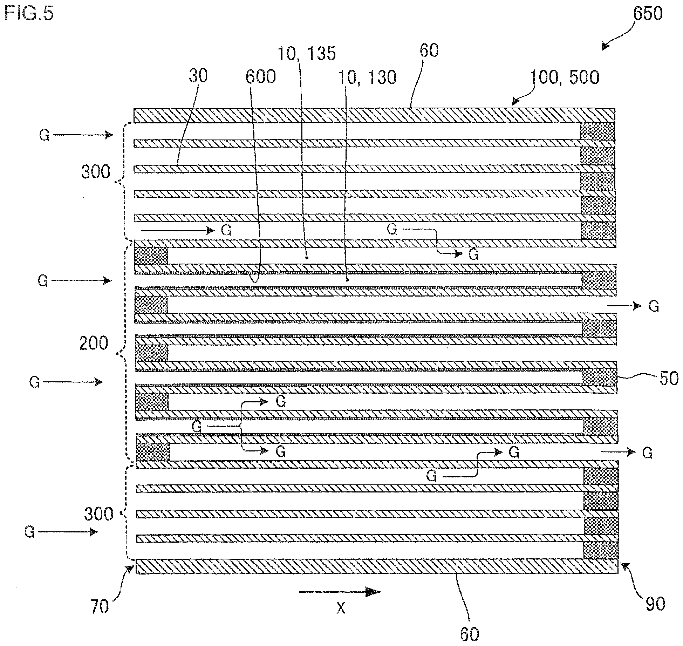

Fig. 5 is a cross sectional view schematically showing an embodiment of a honeycomb catalyst body of the present invention. In the honeycomb catalyst body 650 of the present embodiment, a catalyst is loaded on the surfaces of part of the partition walls 30. This forms a catalyst layer 600 on the surfaces of the part of the partition walls 30.

In the honeycomb catalyst body 650 of the present embodiment, even in the case that the catalyst layer 600 is formed on the surfaces of the partition walls 30, there are pores passing through the partition walls 30 from one surface to the surface on the opposite side. When the gas G passes through such pores, harmful substances such as carbon monooxide (CO), hydrocarbon (HC), and nitrogen oxides (NOx) contained in the gas are purified by the catalyst layer 600 with which the surfaces of the partition walls 30 are coated.

In the honeycomb catalyst body 650 of the present embodiment, the catalyst is loaded on the surfaces of only the partition walls 30 facing the inflow side open cells 130 among the partition walls 30 separating and forming the cells 10 constituting the first cell group 200.

Thus, in the honeycomb catalyst body 650 of the present embodiment, since a catalyst is loaded not on all the partition walls 30, but on the surfaces of the partition walls 30 facing part of the inflow side open cells 130, the amount of the catalyst loaded per one honeycomb catalyst body 650 can be reduced, and the catalyst costs which are generally high can be reduced.

As the honeycomb catalyst body 650 of the present embodiment, when the width of the second cell group 300 in the honeycomb structural portion 500 is small, the number of the inflow side open cells 130 in the first cell group 200 is increased, and thereby the gas purification function by the catalyst is enhanced. On the other hand, when the width of the second cell group 300 in the honeycomb structural portion 500 is large, the function of inhibiting crack generation due to thermal stress is enhanced.

Therefore, in the honeycomb catalyst body 650 of the present embodiment, it is desired to determine the width of the second cell group 300 in such a manner that the purification function by the catalyst can be exhibited sufficiently by loading a catalyst at least on the surfaces of the partition walls 30 facing the inflow side open cells 130 among the partition walls 30 separating and forming the cells 10 constituting the first cell group 200.

In particular, in the honeycomb catalyst body 650 of the present embodiment, from the viewpoints of maintaining a sufficient purification function by the catalyst with suppressing the catalyst costs and inhibiting crack generation due to the thermal stress, it is preferable that the width of the second cell group 300 is for one to four cells from the cells 10 located in the outermost periphery, that the width of the second cell group 300 in a cross section perpendicular to the cell 10 extension direction X of the honeycomb structural portion 500 is 1 to 40% with respect to the length from the center to the outer peripheral edge of the cross section, and that the catalyst is loaded only on the surfaces of the partition walls 30 facing the inflow side open cell 130 of the first cell group 200.

In particular, the honeycomb catalyst body 650 of the present embodiment can suitably be used for exhaust gas purification. The exhaust gas in the present specification means exhaust gas discharged from engines for automobiles, engines for construction machinery, or stationary engines for industries, burning appliances, and the like. In such exhaust gas from various engines or burning appliances, many harmful substances such as carbon monooxide (CO), hydrocarbon (HC), and nitrogen oxides (NOx) may be contained. According to the honeycomb catalyst body 650 of the present embodiment, harmful substances contained in the exhaust gas from various engines or burning appliances can be purified efficiently.

Since the honeycomb catalyst body 650 of the present embodiment employs the aforementioned plugged honeycomb structure 100 (of the present invention), when the gas G having high temperature is sent into the catalyst body, the temperature difference between the central portion and the outer peripheral portion of the honeycomb catalyst body 650 hardly spreads, and crack generation due to the thermal stress is inhibited. Therefore, the honeycomb catalyst body 650 of the present embodiment can be installed even in the places where it is easily exposed to high-temperature exhaust gas, specifically, the places where it is difficult to install a conventional honeycomb catalyst body, such as places near the engine or the burning appliances. As a result, the honeycomb catalyst body 650 of the present embodiment can sufficiently respond to miniaturization of automobiles, construction machinery, and the like.

In a honeycomb catalyst body of the present invention, the kind of the catalyst can suitably be selected according to the purpose. For example, a ternary catalyst, an oxidation catalyst, NOx selective reduction catalyst, or NOx adsorber reduction catalyst may be selected. The amount of the loaded catalyst per unit volume is preferably 10 to 300 g/L, more preferably 50 to 200 g/L.

The ternary catalyst means a catalyst purifying mainly hydrocarbon (HC), carbon monooxide (CO), and nitrogen oxides (NOx). Examples of the ternary catalyst include a catalyst containing platinum (Pt), palladium (Pd), and rhodium (Rh).

Examples of the oxidation catalyst include a catalyst containing a noble metal. Specifically, the catalyst preferably contains at least one kind selected from the group consisting of platinum, palladium, and rhodium.

Examples of the NOx selective reduction catalyst include at least one kind selected from a metal-substitutedzeolite, vanadium, titania, tungsten oxide, silver, and alumina.

Examples of the NOx adsorber reduction catalyst include alkali metals and/or alkali earth metals. Examples of the alkali metals include potassium, sodium, and lithium. Examples of the alkali earth metals include calcium.

### (4) Method for manufacturing honeycomb catalyst body:

A honeycomb catalyst body of the present invention can be manufactured as follows.

In the first place, a plugged honeycomb structure is manufactured as a catalyst carrier. The plugged honeycomb structure can be manufactured according to the aforementioned method for manufacturing a plugged honeycomb structure.

Next, catalyst slurry is prepared. The average particle diameter of the catalyst contained in the catalyst slurry is generally 0.5 to 5 µm. Further, the catalyst slurry has a viscosity (25°C) of 1 to 10 mPa·s. When both the average particle diameter and the viscosity of the aforementioned catalyst are above the lower limits, excessive filling of the catalyst into the pores can be inhibited, and the increase in pressure loss in the resultant honeycomb catalyst body can be suppressed. When both the average particle diameter and the viscosity of the aforementioned catalyst are below the upper limits, the catalyst can securely be filled into the pores. Therefore, a honeycomb catalyst body having high exhaust gas purification performance can easily be obtained.

Next, the catalyst slurry is loaded on the plugged honeycomb structure. As a method for loading the catalyst slurry on the plugged honeycomb structure, a conventionally know method such as dipping or suction can be employed. It is possible that, after the dipping or suction, surplus catalyst slurry is blown off by compressed air.

In the case of loading the catalyst only on the surfaces of the partition walls facing the inflow side open cells of the first cell group, for example, the end portions of the second cell group in the inflow end face may be masked before the catalyst slurry is loaded on the plugged honeycomb structure. Since this makes only the inflow side open cell of the first cell group open in the inflow end face, it becomes possible to allow the catalyst slurry to flow into only the inflow side open cells of the first cell group when the catalyst slurry is sent from the inflow end face.

Next, the plugged honeycomb structure carrying the catalyst slurry is dried and then subjected to a thermal treatment. Thus, a honeycomb catalyst body can be manufactured. The drying conditions may be 120 to 180°C and 10 to 30 minutes. The conditions for the thermal treatment may be 550 to 650°C and 1 to 5 hours. Example

### [Manufacture of plugged honeycomb structure]

### (Examples 1 to 4 not according to the invention)

As the ceramic raw material, a cordierite-forming raw material (alumina, talc, and kaolin) was used. The mass ratio of the alumina, talc, and kaolin was determined so that cordierite can be obtained after firing. With the ceramic raw material were mixed a binder (methyl cellulose) and water to obtain a ceramic forming raw material. The ceramic forming raw material was kneaded by the use of a kneader to obtain a kneaded material.

Next, the kneaded material was formed by the use of a vacuum extruder to obtain a honeycomb formed body. The honeycomb formed body was a body whose entire shape was unitarily formed (unitary structure) by extrusion. The honeycomb formed body was made so as to have a partition wall thickness of 0.178 mm, a cell density of 31 cells/cm², the cell pitch of 1.80 mm, and a cylindrical entire shape (a diameter of inflow end face and outflow end face of 143.8 mm and a length in the cell extension direction of 152.4 mm) in the case of firing the honeycomb formed body to obtain an unplugged honeycomb structure.

Next, a plurality of cells present in a honeycomb formed body was sectioned into the first cell group present in the central portion and the second cell group surrounding the outer periphery of the first cell group. The width of the second cell group in each of Examples 1 to 4 is shown in Table 1.

Subsequently, a mask was applied to predetermined cell open portions in the end faces (inflow end face and outflow end face) of the honeycomb formed body.

In the first cell group, the cells each having the mask on the cell open portion and the cells each having no mask on the cell open portion are alternately arranged. In the first cell group, each of the cells having a mask on the cell open portion in the inflow end face had no mask on the cell open portion in the outflow end face, and each of the cells having no mask on the cell open portion in the inflow end face had a mask on the cell open portion of the outflow end face.

In the second cell group, all the cells had a mask only on the cell open portion in the inflow end face.

Next, each of the inflow end face and the outflow end face of the honeycomb formed body was immersed in plugging slurry containing a cordierite-forming raw material, plugging slurry was filled into the cell opening portions of the cells having no mask. Thus, there was obtained a plugged honeycomb structure having plugging portions disposed in the open portions of the predetermined cells in the inflow end face and the outflow end face.

The plugged honeycomb structure was obtained by heating the plugged honeycomb formed body at 450°C for five hours for degreasing and further heating it at 1425°C for seven hours for firing. In the plugged honeycomb structure, the average "plugging depth (depth of plugging)" of the plugging portions was 5 mm.

### (Comparative Example 1)

There was obtained a plugged honeycomb structure in the same manner as in Example 1 except that, regarding all the cells in the honeycomb formed body, the cells each having a mask on the cell open portion and the cells each having no mask on the cell open portion were alternately arranged in the inflow end face and the outflow end face in the same manner as in the first cell group mentioned above. That is, since the plugged honeycomb structure of Comparative Example 1 did not have the second cell group, the "width of the second cell group" was "zero".

Regarding each of the plugged honeycomb structures of Examples 1 to 4 and Comparative Example 1, the effective cross-sectional area (cm²) of the outflow end face and the gas contact surface area (cm²) are shown in Table 1. Here, the "effective cross-sectional area (cm²) of the outflow end face" means the sum of the open area of the end portions of the cells open on the outflow end face with respect to the entire area (cm²) of the outflow end face. In addition, the "gas contact surface area" means the total surface area of the partition walls facing the inflow side open cells of the first cell group.

The plugged honeycomb structure obtained above was measured for the "temperature difference (°C) between the central portion and the outer peripheral portion", "fracture temperature (°C)", and "pressure loss (kPa)". The measurement results are shown in Table 1.

### [Temperature difference between the central portion and the outermost peripheral portion]

Gas having a flow rate of 24 L/min. was sent into the plugged honeycomb structure from the inflow end face so that the highest temperature might reach 900°C within five minutes. There were measured the temperature of a partition wall separating the cell on the central axis [temperature (°C) in the central portion] and the temperature of a partition wall separating the cell in the outermost periphery [temperature (°C) in the outermost peripheral portion] of the plugged honeycomb structure when five minutes had passed from the gas inflow to obtain the temperature difference between the central portion and the outermost peripheral portion as the "temperature difference (°C) between the central portion and the outermost peripheral portion".

### [Fracture temperature]

Gas having a flow rate of 24 L/min. was sent into the plugged honeycomb structure from the inflow end face so that the temperature might reach 900°C after five minutes. After the carrier was cooled down to the room temperature by sending cooling air, presence/absence of crack generation was confirmed by eye observation. When no crack generation was caused in the plugged honeycomb structure, temperature of the inflow gas was raised by 25°C, the same test was repeated at each temperature. When crack generation was confirmed, the test was stopped at that time, and the inflow gas temperature at the time of causing the crack generation was employed as the "fracture temperature". For example, in the case that crack generation is confirmed in the first observation (900°C), the fracture temperature is 900°C, and, in the case that crack generation is confirmed in the third observation [950°C(=900+25°C+25°C)], the fracture temperature is 950°C.

### [Pressure loss (kPa)]

The pressure loss of the plugged honeycomb structure was measured by the use of the "pressure loss measuring device for a filter" described in JP-A-2005-172652. As the measurement conditions, the flow rate of the fluid was 6 Nm³/min., and the fluid temperature in the experiment was 25°C.

**Table 1**

| | Width of the second cell group | Effective cross-sectional area of outflow end face (cm²) | Gas contact surface area (cm²) | Temperature difference between central portion and outermost peripheral portion (°C) | Fracture temperature (°C) | Pressure loss (kPa) |
|---|---|---|---|---|---|---|
| Example 1 | One cell | 80.2 | 51300 | 190 | 1000 | 0.78 |
| Example 2 | Two cells | 78.3 | 50100 | 180 | 1025 | 0.81 |
| Example 3 | Three cells | 76.5 | 48900 | 170 | 1050 | 0.84 |
| Example 4 | Four cells | 74.6 | 47700 | 160 | 1075 | 0.87 |
| Comp. Ex. 1 | Zero | 81.2 | 51900 | 200 | 950 | 0.76 |

### [Discussion]

As a result of comparing Examples 1 to 4 with Comparative Example 1, it was found out that, in Examples 1 to 4, it was possible to reduce the temperature difference between the central portion and the outermost peripheral portion of the plugged honeycomb structure and to raise fracture temperature while maintaining the appropriate gas contact area and pressure loss. That is, it was found out that, in Examples 1 to 4, even when the gas temperature change was caused, crack generation could be inhibited more securely. As a result of comparison among Examples 1 to 4, it was found out that, as the width of the second cell group increased, the temperature difference between the central portion and the outermost peripheral portion of the plugged honeycomb structure tended to decrease.

### Industrial Applicability

The present invention can be a honeycomb catalyst body using the plugged honeycomb structure.

## Claims

1. A honeycomb catalyst body (650) comprising:
a plugged honeycomb structure (100) comprising:
a honeycomb structural portion (500) having porous partition walls (30) separating and forming a plurality of cells (10) extending from an inflow end face (70) to an outflow end face (90) and functioning as fluid passages, and
a plurality of plugging portions (50) plugging an end portion of each of the cells (10);
wherein the honeycomb structural portion (500) has a first cell group (200) constituted of an aggregate of cells (10) located in a central portion of the honeycomb structural portion (500) and a second cell group (300) constituted of an aggregate of cells (10) surrounding the outer periphery of the first cell group (200),
the first cell group (200) is constituted so that the cells (10) having the plugging portions (50) disposed in the end portions on the inflow end face side (70) and no plugging portions (50) disposed in the end portions on the outflow end face side (90) and the cells (10) having the plugging portions (50) disposed in the end portions on the outflow end face side (90) and no plugging portions (50) disposed in the end portions on the inflow end face side (70) are alternately arranged across the partition walls (30), and
the second cell group (300) is constituted of the cells (10) having the plugging portions (50) disposed in the end portions on the outflow end face side (90) and no plugging portions (50) disposed in the end portions on the inflow end face side (70);
and
a catalyst (600) loaded only on surfaces of the partition walls (30) facing to the cells (10) in the first cell group (200) having the plugging portions (50) disposed in the end portions on the outflow end face side (90) and no plugging portions (50) disposed in the end portions on the inflow end face side (70) of surfaces of all partition walls (30) of the plugged honeycomb structure (100).

2. The honeycomb catalyst body (650) according to claim 1, wherein in the plugged honeycomb structure (100) the width of the second cell group (300) is for one to four cells from the cell (10) located in the outermost periphery of the honeycomb structural portion (500).

## Patentansprüche

1. Wabenkatalysatorkörper (650), der Folgendes umfasst:
eine verschlossene Wabenstruktur (100), die Folgendes umfasst:
einen Wabenstrukturabschnitt (500), der poröse Trennwände (30) aufweist, die eine Vielzahl von Zellen (10) voneinander trennen und ausbilden, die sich von einer Einströmendoberfläche (70) zu einer Ausströmendoberfläche (90) erstrecken und als Fluiddurchlässe fungieren, und
eine Vielzahl von Verschlussabschnitten (50), die einen Endabschnitt jeder der Zellen (10) verschließen;
wobei der Wabenstrukturabschnitt (500) eine erste Zellgruppe (200), die aus einem Aggregat von Zellen (10) besteht, die in einem mittleren Abschnitt des Wabenstrukturabschnitts (500) positioniert sind, und eine zweite Zellgruppe (300) aufweist, die aus einem Aggregat von Zellen (10) besteht, die den Außenumfang der ersten Zellgruppe (200) umgeben;
wobei die erste Zellgruppe (200) so aufgebaut ist, dass die Zellen (10), bei denen die Verschlussabschnitte (50) in den Endabschnitten auf der Einströmendoberfläche (70) angeordnet sind und bei denen keine Verschlussabschnitte (50) in den Endabschnitten auf der Ausströmendoberfläche (90) angeordnet sind, und die Zellen (10), bei denen Verschlussabschnitte (50) in den Endabschnitten auf der Ausströmendoberfläche (90) angeordnet sind und bei denen keine Verschlussabschnitte (50) in den Endabschnitten auf der Einströmmendoberfläche (70) angeordnet sind, alternierend zu beiden Seiten der Trennwände (30) angeordnet sind und
wobei die zweite Zellgruppe (300) aus den Zellen (10) besteht, bei denen die Verschlussabschnitte (50) in den Endabschnitten auf der Ausströmendoberfläche (90) angeordnet sind und bei denen keine Abdichtungabschnitte (50) in den Endabschnitten auf der Einströmendoberfläche (70) angeordnet sind;
und
einen Katalysator (600), der nur auf Oberflächen der Trennwände (30), die den Zellen (10) in der ersten Zellgruppe (200), bei denen die Verschlussabschnitte (50) in den Endabschnitten auf der Ausströmendoberfläche (90) angeordnet sind und bei denen keine Verschlussabschnitte (50) in den Endabschnitten auf der Einströmendoberfläche (70) angeordnet sind, zugewandt sind, von Oberflächen aller Trennwände (30) der verschlossenen Wabenstruktur (100) beladen ist.

2. Wabenkatalysatorkörper (650) nach Anspruch 1, wobei in der verschlossenen Wabenstruktur (100) die Breite der zweiten Zellgruppe (300) eine bis vier Zellen von der Zelle (10), die im äußersten Umfang des Wabenstrukturabschnitts (500) angeordnet ist, beträgt.

## Revendications

1. Corps de catalyseur en nid d'abeilles (650) comprenant :
une structure en nid d'abeilles obturée (100) comprenant :
une partie structurelle en nid d'abeilles (500) ayant des parois de séparation poreuses (30) séparant et formant une pluralité de cellules (10) s'étendant depuis une face d'extrémité de flux entrant (70) vers une face d'extrémité de flux sortant (90) et fonctionnant comme des passages de fluide, et
une pluralité de parties d'obturation (50) obturant une partie d'extrémité de chacune des cellules (10) ;
dans lequel la partie structurelle en nid d'abeilles (500) comporte un premier groupe de cellules (200) constitué d'un agrégat de cellules (10) situé dans une partie centrale de la partie structurelle en nid d'abeilles (500) et un second groupe de cellules (300) constitué d'un agrégat de cellules (10) entourant la périphérie extérieure du premier groupe de cellules (200),
le premier groupe de cellules (200) est constitué de telle sorte que les cellules (10) ayant les parties d'obturation (50) disposées dans les parties d'extrémité sur le côté face d'extrémité de flux entrant (70) et aucune partie d'obturation (50) disposée dans les parties d'extrémité sur le côté face d'extrémité de flux sortant (90) et les cellules (10) ayant les parties d'obturation (50) disposées dans les parties d'extrémité sur le côté face d'extrémité de flux sortant (90) et aucune partie d'obturation (50) disposée dans les parties d'extrémité sur le côté face d'extrémité de flux entrant (70) sont agencées alternativement à travers les parois de séparation (30), et
le second groupe de cellules (300) est constitué des cellules (10) ayant les parties d'obturation (50) disposées dans les parties d'extrémité sur le côté face d'extrémité de flux sortant (90) et aucune partie d'obturation (50) disposée dans les parties d'extrémité côté face d'extrémité de flux entrant (70) ;
et
un catalyseur (600) chargé uniquement sur des surfaces des parois de séparation (30) faisant face aux cellules (10) du premier groupe de cellules (200) ayant les parties d'obturation (50) disposées dans les parties d'extrémité sur le côté face d'extrémité de flux sortant (90) et aucune partie d'obturation (50) disposée dans les parties d'extrémité sur le côté face d'extrémité de flux entrant (70) de surfaces de toutes les parois de séparation (30) de la structure en nid d'abeilles obturée (100).

2. Corps de catalyseur en nid d'abeilles (650) selon la revendication 1, dans lequel, dans la structure en nid d'abeilles obturée (100), la largeur du second groupe de cellules (300) est comprise entre une et quatre cellules depuis la cellule (10) située dans la périphérie la plus extérieure de la partie structurelle en nid d'abeilles (500).
